# EUROPEAN PATENT SPECIFICATION

(11) **EP 4 279 915 B1**
(45) Date of publication and mention of the grant of the patent: **19.08.2026**
(21) Application number: 21919577.3
(22) Date of filing: 26.11.2021
(51) Int. Cl.: G01N 30/54, G01N 30/60, G01N 30/86

(54) **SEPARATION COLUMN CONNECTION DEVICE AND SEPARATION DEVICE**
TRENNSÄULEN-VERBINDUNGSEINRICHTUNG UND TRENNVORRICHTUNG
DISPOSITIF DE RACCORDEMENT DE COLONNE DE SÉPARATION ET DISPOSITIF DE SÉPARATION

(30) Priority: 13.01.2021 JP 2021003225
(43) Date of publication of application: 22.11.2023
(73) Proprietor: HITACHI HIGH-TECH CORPORATION, Tokyo 105-6409 (JP)
(72) Inventor: YAMASHITA Taichiro, Tokyo 100-8280 (JP); TOMIDA Shoji, Tokyo 105-6409 (JP); SHIMIZU Yusuke, Tokyo 105-6409 (JP); IIJIMA Yu, Tokyo 105-6409 (JP); MASUDA Ai, Tokyo 100-8280 (JP); FURUKAWA Daichi, Tokyo 100-8280 (JP)
(74) Representative: Strehl & Partner mbB
(86) International application number: PCT/JP2021/043363
(87) International publication number: WO 2022/153686

(56) References cited:
- WO-A1-2017/199335
- WO-A1-2020/175651
- WO-A2-2013/095964
- JP-A- 2007 078 436
- JP-A- 2020 186 979
- JP-A- H07 239 325
- US-A1- 2010 154 207

## Description

### Technical Field

The present disclosure relates to a separation column connection device and a separation device.

### Background Art

In liquid chromatograph (LC), solid-phase extraction (SPE), and the like, foreign substance removal and high-precision analysis by concentrating a microscale sample can be achieved by separating a sample by means of a separation column filled with a filler. The sample travels through an inside of the separation column from an inlet pipe connected to an upstream side of the separation column and is separated and discharged from an outlet pipe connected to a downstream side of the separation column. The separation column is replaced depending on a sample to be measured, or replaced also when the end of the useful life of the separation column is reached.

Accordingly, it is desirable that the separation column is easily replaced and pressed by the upstream pipe and the downstream pipe with a predetermined pressure when it is set to avoid leakage of the sample. Further, it is desirable to have a configuration that does not allow an operator to contact the pipes when the pipes are separated from the separation column, and then, the separation column is detached to avoid adhesion of foreign matter or deformation of the pipes.

Patent Literature 1 discloses a separation column connection device having a configuration that "includes: a column holder for retaining a separation column; a first fitting holder carrying a first fitting which includes a seal portion to be connected to an upstream seal portion of the separation column and is connected with an upstream pipe; a second fitting holder carrying a second fitting which includes a seal portion to be connected to a downstream seal portion of the separation column and is connected with a downstream pipe; a body member to which either one of the first fitting holder and the second fitting holder is fixed; a driver for moving, relative to the body member, the first fitting holder or the second fitting holder that is not fixed to the body member; a guide for guiding the column holder in a direction of movement driven by the driver; and an elastic body disposed between the column holder and the second fitting holder" (see paragraph 0008 of Patent Literature 1). It discloses that with such a configuration, "the device configured to enable cost reduction and downsizing can prevent the air invasion and provide highly reproducible analysis" (see paragraph 0012 of Patent Literature 1).

### Citation List

### Patent Literature

Patent Literature 1: Japanese Patent No. 6611398

WO 2020/175651 discloses a column oven for an analyzing device having a column change mechanism having the features in the pre-characterizing portion of Claim 1 in common with the separation column connection device of the present invention. A further analytical chemical instrument related to the present invention is disclosed in US 2010/154207 A1.

### Summary of Invention

### Technical Problem

In the configuration disclosed in Patent Literature 1, the column holder is moved by the driver along the guide. The separation column is retained by the column holder. Accordingly, when the separation column is replaced, it is necessary to remove only the separation column from the column holder and attach a new separation column to the column holder. As a configuration for attaching the separation column to the column holder, a configuration in which the separation column is connected and disconnected by providing a pin for positioning and fixing and using elastic deformation of the pin (Embodiment 19) and a configuration in which the separation column is connected and disconnected by means of a hinge that elastically deforms (Embodiment 20) have been disclosed.

However, when the separation column is attached, it is necessary to position the pin and a hole or to position the hinge and a portion that receives the hinge, and an operator needs to work with care, therefore putting a significant burden on the operator.

Therefore, the present disclosure provides a technique that facilitates replacement of a separation column.

### Solution to Problem

In order to achieve the above-described object, the present invention suggests the separation column connection device defined in Claim 1. Further advantageous features are set out in the dependent claims.

Further features related to the present disclosure are clarified from the descriptions of this specification and the accompanying drawings. The aspects of the present disclosure can be accomplished and achieved by components and combinations of various components, and the following detailed description and the aspects of the accompanying claims. It should be understood that the descriptions of this specification are merely typical examples and therefore do not limit the claims of the present disclosure or application examples by any means.

### Advantageous Effects of Invention

The technique of the present disclosure facilitates replacement of a separation column. Problems, configurations, and effects other than those described above are clarified in the description of embodiments below.

### Brief Description of Drawings

Fig. 1 is a C-C partial cross-sectional front view of a separation column connection device according to a first embodiment.
Fig. 2 is an A-A cross-sectional top view of the separation column connection device according to the first embodiment.
Fig. 3 is a B-B cross-sectional side view of the separation column connection device according to the first embodiment.
Fig. 4 is a drawing illustrating a state where a heat block is retracted from the separation column.
Fig. 5 is a drawing illustrating the middle of operation to release pipes from the separation column.
Fig. 6 is a drawing illustrating a state where the pipes are released from the separation column.
Fig. 7 is a drawing illustrating a state where a column cartridge is detached.
Fig. 8 is a drawing illustrating a state in the middle of attaching operation of the separation column.
Fig. 9A is a B-B cross-sectional side view of the separation column connection device according to the first embodiment and illustrates a state where the column cartridge is detached.
Fig. 9B is a B-B cross-sectional side view of a separation column connection device according to a second embodiment and illustrates a state where the column cartridge is detached.
Fig. 10A is a perspective view illustrating a part of the separation column connection device according to the second embodiment.
Fig. 10B is a perspective view illustrating a part of the separation column connection device according to the second embodiment.
Fig. 11 is a front view illustrating a part of a separation column connection device according to a third embodiment.
Fig. 12 is a D-D cross-sectional side view of the separation column connection device according to the third embodiment.

### Description of Embodiments

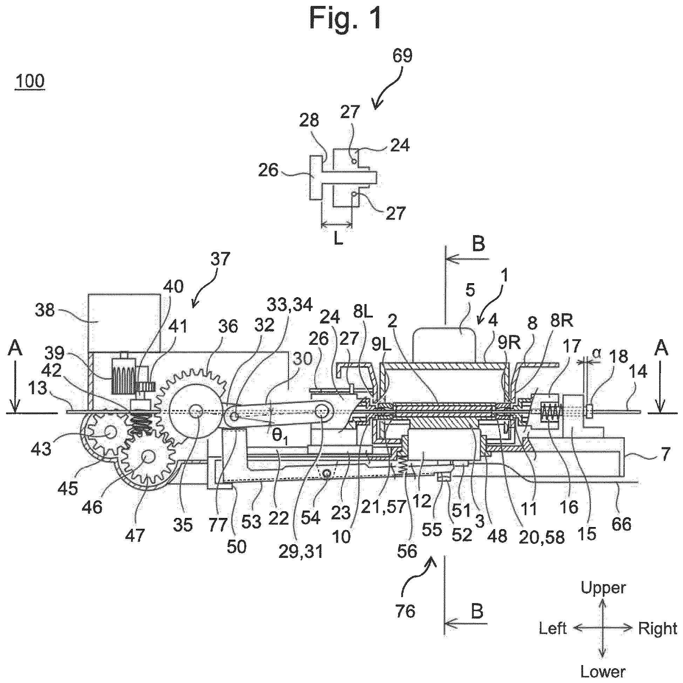

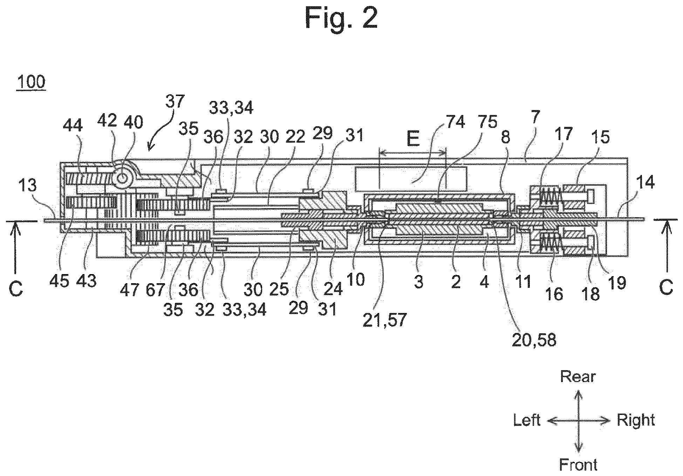

The following describes embodiments of the present disclosure with reference to the drawings. In the descriptions of the embodiments, up-down, right-left, and front-rear directions are based on the up-down, right-left, and front-rear directions indicated in Fig. 1 and Fig. 2.

Separation column connection devices described in the embodiments can be mounted to every device in which a separation column is used. Examples of such a device includes, for example, a separation device that separates components in a sample, such as a liquid chromatograph and a solid-phase extraction device, and an analyzer including a separation device.

### [First Embodiment]

### <Exemplary Configuration of Separation Column Connection Device>

Fig. 1 is a C-C partial cross-sectional front view of a separation column connection device 100 according to a first embodiment. The separation column connection device 100 includes a base 7, a column case 8, a first pipe fixing portion 10, a second pipe fixing portion 11, a first pipe 13, a second pipe 14, a fixing block 15, a pressing spring 16, a pressing block 17, a pressing stopper 18, a slide rail 22, a slider 23, a movement block 24, a driving device 37, an interlocking mechanism 69, and a heating mechanism 76. Fig. 1 illustrates a state (closed state) where a separation column 2 is pressurized and connected between the first pipe 13 and the second pipe 14.

The column case 8 is a container having an approximately rectangular parallelepiped shape with an open upper surface, and a column cartridge 1 is connected to or disconnected from an inside of the column case 8. Fig. 1 illustrates a state where the column cartridge 1 is attached to the column case 8. The column cartridge 1 has a column holder 4 in which the separation column 2 and a first heat block 3 are housed and a tab 5 projecting upward from an upper surface of the column holder 4. The separation column 2 is formed in, for example, an approximately cylindrical shape and contains a filler inside. When the separation column 2 is detached or attached, an operator can perform connecting/disconnecting operation by pinching the tab 5 with his/her fingers to move a unit of the column cartridge 1 in the up-down direction relative to the column case 8. As illustrated in Fig. 1, the opening of the column case 8 may be reversely tapered near an upper end such that the upper end is widened. Since such a shape becomes a guide for inserting the column cartridge 1, the operator easily inserts the column cartridge 1.

The first heat block 3 is arranged so as to cover a cylindrical surface of the separation column 2. By heating the first heat block 3 from outside, the separation column 2 can be maintained at a predetermined temperature. A protruding portion projecting downward is disposed in the first heat block 3. A material of the first heat block 3 can be, for example, a material having a high thermal conductivity, such as aluminum. The first heat block 3 may incorporate, for example, a temperature sensor, such as a thermistor.

The column holder 4 has an approximately rectangular parallelepiped shape and surrounds the separation column 2 and the first heat block 3. The column holder 4 has openings at parts corresponding to both end surfaces of the separation column 2 and the protruding portion of the first heat block 3.

Materials of the column holder 4 and the tab 5 can be, for example, a resin material, such as a polyphenylene sulfide resin, and in particular, can be a resin having chemical resistance. This allows a surface of the column holder 4 and the tab 5 to maintain a low temperature even when the first heat block 3 inside the column holder 4 is heated to a high temperature. Accordingly, a heat leakage amount is small, and the temperature of the separation column 2 is less likely to vary. A material of the column case 8 can also be, for example, a resin material, such as a polyphenylene sulfide resin, and in particular, a resin having chemical resistance.

Although illustration is omitted, one or a plurality of holes (for example, around 1 mm in diameter) communicated with the first heat block 3 may be provided along a longitudinal direction (right-left direction) of the separation column 2 on the upper surface of the column holder 4. Through the hole, a probe for temperature measurement (not illustrated) may be brought into contact with the first heat block 3 to form a configuration that allows measuring the temperature of the first heat block 3 surface. This allows confirming whether or not the temperature of the separation column 2 is appropriate, and by controlling energizing power to a heater depending on the temperature measurement result of the separation column 2, temperature regulation of the separation column 2 can be performed accurately.

The column case 8 has a left sidewall surface 8L in which a hole 9L passable by a right end portion of the first pipe fixing portion 10 is opened. The column case 8 has a right sidewall surface 8R in which a hole 9R passable by a left end portion of the second pipe fixing portion 11 is opened. These holes 9L and 9R have diameters of, for example, 10 mm or less and are configured to block the operator's fingertips from entering and contacting the first pipe 13 and the second pipe 14. However, it does not mean that the operator can never contact the first pipe 13 or the second pipe 14. This decreases the likelihood that the operator contacts distal ends of the pipes and foreign matter adheres to the distal ends even when the column cartridge 1 is detached and allows providing the highly reliable separation column connection device 100.

The base 7 is fixed to a position thereof. The base 7 can be processed by, for example, a highly rigid manufacturing method, such as aluminum die casting, casting, or sheet-metal welding construction. The column case 8 is supported by the base 7 to be movable for a predetermined amount linearly in the right-left direction. Accordingly, the column cartridge 1 moves together in the right-left direction in a state of being set in the column case 8. Details of the movement of the column case 8 will be described later.

The heating mechanism 76 has a second heat block 12, a heater guide 48, a heater element 51, and a heater line 66. The heater guide 48 is fixed to the base 7. For example, the heater guide 48 is made of resin having heat resistance and has an approximately rectangular parallelepiped shape. The second heat block 12 has an approximately rectangular parallelepiped shape and is opposed to and comes into contact with a bottom surface (heat-receiving surface) of the protruding portion of the first heat block 3 from below. The second heat block 12 is movably supported by the heater guide 48 in the up-down direction. The column case 8 has a bottom surface provided with a through hole through which the second heat block 12 and the heater guide 48 pass. The heater element 51 is a heating source of the first heat block 3 and the second heat block 12 and disposed on a bottom surface of the second heat block 12. The heater line 66 is connected to the heater element 51. By energizing the heater line 66, heat from the heater element 51 can be transmitted to the first heat block 3 using an upper surface of the second heat block 12 as a heat-transmitting surface and a lower surface of the first heat block 3 as the heat-receiving surface. Thus, the separation column 2 can be heated to a predetermined temperature.

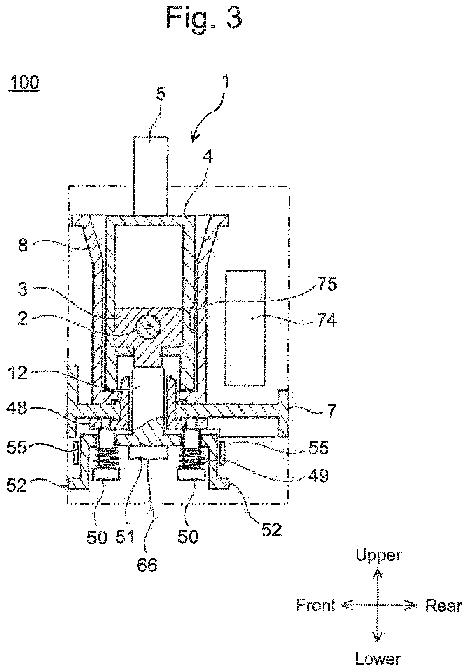

The separation column connection device 100 further includes a heater moving mechanism that moves the second heat block 12 up and down. The heater moving mechanism includes heater push springs 49 (illustrated in Fig. 3), stoppers 50 (illustrated in Fig. 3), heater push-down protrusions 52, an interlocking link 53, an interlocking link supporting point 54, heater push-down portions 55, and a heater release spring 56. Details of the configuration and operation of the heater moving mechanism will be described later.

The slide rail 22 is disposed on a left side upper surface of the base 7 along the right-left direction. The slider 23 moves along the slide rail 22 in the right-left direction. The movement block 24 (moving member) is disposed on the slider 23 and moves together with the slider 23 in the right-left direction. The first pipe fixing portion 10 is disposed at a right end portion of the movement block 24 and fixes the first pipe 13. When the movement block 24 moves, the first pipe fixing portion 10 and the first pipe 13 fixed thereto also move. The first pipe 13 is a pipe that supplies or discharges a sample and is disposed to extend to the left of the separation column 2 in a concentric manner with the separation column 2.

The fixing block 15 (fixing member) is fixed to a right side upper surface of the base 7 and has an approximately L shape in front view. The pressing block 17 is disposed at the left of the fixing block 15. The pressing block 17 applies a preload to the left toward the separation column 2 inside the column cartridge 1 via the pressing spring 16 (first biasing member). The pressing stopper 18 is a bolt-shaped member and passes through the fixing block 15 to be screwed to the pressing block 17. The pressing stopper 18 has a columnar portion inserted into the pressing spring 16. The pressing stopper 18 limits a moving amount of the pressing block 17 to the left. When the pressing block 17 moves to the left by a pushing force of the pressing spring 16, a large-diameter portion corresponding to a bolt head of the pressing stopper 18 comes into contact with the fixing block 15, limiting further movement of the pressing block 17 to the left. In this state, an initial pre-pressure may be applied from the pressing spring 16 to the pressing block 17.

The second pipe fixing portion 11 (fixing member) is disposed at a left end portion of the pressing block 17 and fixes the second pipe 14. The second pipe 14 is a pipe that discharges or supplies a sample and is disposed to extend to the right of the separation column 2 in a concentric manner with the separation column 2.

The first pipe fixing portion 10 and the second pipe fixing portion 11 may have the same structure, and are disposed symmetrically to be opposed to one another. One of the first pipe 13 and the second pipe 14 is upstream, and the other is downstream. The upstream pipe is connected to an LC pump (not illustrated) or the like, and the downstream pipe is connected to a detector (not illustrated) or the like.

The first pipe 13 is movably supported between a position (closed state) and a position (open state). In the position (closed state), a first pipe distal end surface 21 is pressurized to come into contact with a first abutting surface 57 (left end surface) of the separation column 2. In the position (open state), the first pipe 13 moves to the left, and an interval between the first pipe distal end surface 21 and a second pipe distal end surface 20 becomes larger than an interval between respective outer surfaces of the left sidewall surface 8L and the right sidewall surface 8R of the column case 8.

When the first pipe distal end surface 21 moves from the position in which the first pipe distal end surface 21 is in contact with the first abutting surface 57 of the separation column 2 to the right by a displacement α by the movement of the movement block 24, a force is applied to the second pipe 14 via the separation column 2, and the second pipe distal end surface 20 moves to the right by the displacement α. This compresses the pressing spring 16 by the displacement α and generates a force expressed by a sum of an initial pre-pressure preliminarily applied to the pressing block 17 from the pressing spring 16 and a biasing force obtained by multiplying a spring constant by the displacement α. Accordingly, the separation column 2 can be sandwiched between the first pipe distal end surface 21 and the second pipe distal end surface 20 while being biased by a predetermined pressing force. The displacement α is, for example, around 1 mm.

The interlocking mechanism 69 is a mechanism that moves the column case 8 in conjunction with the movement of the movement block 24. The interlocking mechanism 69 has a slide plate 26 and a pair of stopper pins 27. In an upper portion of Fig. 1, a top view of the interlocking mechanism 69 is illustrated.

The slide plate 26 is disposed on a left end surface of the column case 8 in parallel to an upper surface of the movement block 24 and moves as a unit with the column case 8. The slide plate 26 has an approximately T shape in plan view. An upper side portion of the T shape is positioned on the left in parallel to the front-rear direction, and a pillar of the T shape is positioned on the right in parallel to the right-left direction. That is, a right end of the pillar of the slide plate 26 is fixed to the left end surface of the column case 8. The pair of stopper pins 27 are disposed on the upper surface of the movement block 24 so as to project in the front-rear direction and upward.

In the pressurized state (closed state) illustrated in Fig. 1, the stopper pins 27 are separated from an abutting portion 28 of the slide plate 26 by a distance L. When the movement block 24 moves to the left from this state, the stopper pins 27 come into contact with the abutting portion 28 (right end surface) of the upper side portion of the slide plate 26. When the stopper pins 27 contact the abutting portion 28, moving operation of the movement block 24 is transmitted to the column case 8, and the column case 8 moves to the left in conjunction with the movement of the movement block 24. That is, after the movement block 24 moves to the left by the distance L, the slide plate 26 and the column case 8 moves to the left.

The driving device 37 includes the movement block 24, a pair of connecting rod spindles 29 (second spindle), a pair of connecting rods 30, a pair of crank arms 32, a pair of crank spindles 33 (third spindle), a pair of output gear spindles 35 (first spindle), a pair of output gears 36, a motor 38, a pinion gear 39, a gear shaft 40, a gear 41, a worm gear 42, a gear spindle 43, a worm wheel 44 (illustrated in Fig. 2), a gear 45, a gear spindle 46, and a gear 47.

The motor 38 is a driving source of the output gears 36 and includes an output shaft positioned downwardly in the embodiment. The motor 38 is, for example, a stepping motor. The stepping motor turns in a predetermined direction at a predetermined angle and a predetermined speed in response to a frequency and the number of pulses of an input pulse signal. The pinion gear 39 is disposed on the output shaft of the motor 38 and turns together with the output shaft of the motor 38. The gear shaft 40 is vertically and rotatably journaled. The gear 41 and the worm gear 42 (speed reducer) are disposed on the gear shaft 40. The gear 41 engages with the pinion gear 39 to turn together with the gear shaft 40 in an opposite direction to the pinion gear 39, and the worm gear 42 also rotates together with the gear shaft 40.

Fig. 2 is an A-A cross-sectional top view of the separation column connection device 100 and illustrates the state where the separation column 2 is pressurized and connected. As illustrated in Fig. 2, the worm wheel 44 (speed reducer) is disposed at the rear of the gear 45. The worm wheel 44 engages with the worm gear 42 to rotate at a reduced speed. The gear spindle 43 is journaled horizontally and rotatably in the front-rear direction. The worm wheel 44 and the gear 45 are disposed on the gear spindle 43. The gear spindle 46 extends in the front-rear direction. The gear 47 is rotatably journaled around the gear spindle 46 and engages with the gear 45.

The output gear spindles 35 are disposed symmetrically in the front-rear direction across the first pipe 13 so as to project from a pair of wall surfaces that are disposed on the base 7. The wall surfaces are parallel in the up-down direction and the right-left direction and opposed to one another. The output gears 36 are turnably journaled around the output gear spindle 35 and engage with the gear 47 to turn. The crank arm 32 is fixed to the output gear 36 and turns back and forth in a range of a predetermined angle as a unit with the output gear 36.

The crank spindles 33 are disposed on the crank arms 32 symmetrically across the first pipe 13 so as to project to outer sides in the front-rear direction. The crank spindles 33 have an approximately cylindrical shape. The connecting rod spindles 29 are disposed on the movement block 24 symmetrically across the first pipe 13 so as to project to the outer sides in the front-rear direction. The connecting rod spindles 29 have an approximately cylindrical shape. The connecting rod 30 has one end portion in which a connecting hole 31 is provided, and the connecting hole 31 is turnably journaled by the connecting rod spindle 29. The connecting rod 30 has the other end portion in which a connecting hole 34 is provided, and the connecting hole 34 is turnably journaled by the crank spindle 33.

With the configuration as described above, when the motor 38 is rotated, a driving force is transmitted in the order of the pinion gear 39, the gear 41, the worm gear 42, the worm wheel 44, the gear 45, the gear 47, and the output gears 36, causing the crank arms 32 to turn while reducing speed. The crank arms 32, the connecting rods 30, and the movement block 24 constitute what is called a crank mechanism, which has a role in converting rotational motion of the crank arms 32 into a linear motion of the movement block 24. As described above, when the motor 38 is driven, the movement block 24 can be moved in the right-left direction (first direction), which allows the first pipe 13 to move in the right-left direction.

As illustrated in Fig. 2, the connecting rods 30, the crank arms 32, the output gear spindles 35, and the output gears 36 are each disposed in pairs symmetrically at the front and rear across the first pipe 13. Since the pair of output gears 36 both engage with the gear 47 and turn constantly in conjunction and synchronization with the gear 47, the pair of crank arms 32 and the pair of connecting rods 30 also operate in synchronization.

The pair of connecting rods 30 act in synchronization with the pair of connecting rod spindles 29 disposed on the movement block 24. Accordingly, when the pair of crank arms 32 turn, a force and a displacement symmetrical across the first pipe 13 are applied to the movement block 24 via the pair of connecting rods 30. This allows the movement block 24 to stably move along the slide rail 22 in the right-left direction without having a bending moment applied, and a predetermined pressing force can be applied to the separation column 2. The pair of connecting rods 30 may be configured as a mutually connected integral part.

A first pipe fixing screw 25 is disposed in the movement block 24. The first pipe fixing screw 25 has a through hole extending in the right-left direction, and the through hole allows the first pipe 13 to pass through. The first pipe 13 can be fixed to the first pipe fixing portion 10 by tightening the first pipe fixing screw 25. The first pipe 13 can be pulled out to the left from the first pipe fixing portion 10 by loosening the first pipe fixing screw 25, and the first pipe 13 can be replaced.

A second pipe fixing screw 19 is disposed in the fixing block 15 and the pressing block 17 so as to pass therethrough. The second pipe fixing screw 19 has a through hole extending in the right-left direction, and the through hole allows the second pipe 14 to pass through. The second pipe 14 can be fixed to the second pipe fixing portion 11 with a left end portion of the second pipe 14 projecting in a predetermined amount to come into contact with a second abutting surface 58 (right end surface) of the separation column 2 by tightening the second pipe fixing screw 19. The second pipe 14 can be pulled out to the right from the second pipe fixing portion 11 by loosening the second pipe fixing screw 19, and the second pipe 14 can be replaced.

Assuming that the shaft centers of the output gear spindles 35 as rotation shafts of the output gears 36 have the same heights as the center height of the first pipe 13, the connecting rods 30 become horizontal at what is called the top dead center position where the crank arms 32, the output gear spindles 35, the crank spindles 33, and the connecting rod spindles 29 are aligned. Accordingly, since the first pipe 13 is positioned on the same horizontal plane as a force applied from the connecting rods 30 to the movement block 24, the first pipe distal end surface 21 is vertically pressed relative to the separation column 2, resulting in stable press.

On the other hand, assuming that the center height of the first pipe 13 is the same as the center height of the output gear spindles 35, the spindles and the pipe intersect and interfere with one another. Therefore, instead of being one double-supported shaft extending in the front-rear direction, the output gear spindles 35 are configured such that a cantilever shaft disposed from a front end side of the base 7 up to a front of the first pipe 13 and a cantilever shaft disposed from a rear end side of the base 7 up to a front of the first pipe 13 are symmetrically disposed in pairs. This allows providing a void 67 between the pair of the output gear spindles 35. By making a width of the void 67 larger than a diameter of the first pipe 13, the first pipe 13 can traverse the void 67. By arranging the first pipe 13 in the void 67, the center heights of the first pipe 13 and the output gear spindles 35 are made to be the same while avoiding interference between the first pipe 13 and the output gear spindles 35, and the first pipe distal end surface 21 is vertically pressed relative to the separation column 2, allowing application of a stable pressing force.

As described above, the first pipe 13 can be pulled out to the left from the first pipe fixing portion 10 by loosening the first pipe fixing screw 25. Here, since the void 67 is provided between the output gear spindles 35 and the width of the void 67 is larger than the diameter of the first pipe 13, in replacing the first pipe 13, the first pipe 13 can be raised upward to move and removed instead of being pulled out to the left in a lengthwise manner. That is, the separation column connection device 100 with the first pipe 13 easily replaced can be provided.

In plan view, the opening on the upper surface of the column case 8 is slightly larger than the column cartridge 1, generating an appropriate gap around the column cartridge 1. This allows the column cartridge 1 to be inserted into and removed from the column case 8.

The column cartridge 1 has a far-side side surface on which an RFID tag 75 (information recording unit) is disposed. The RFID tag 75 allows recording information indicative of, for example, a type of the separation column 2 and a use status, such as a used product or an unused product. At the rear of the column case 8, an RFID reader 74 (information reader) is disposed to be opposed to the RFID tag 75. The RFID reader 74 can read and write information in the RFID tag 75. Note that the RFID reader 74 can exchange data with the RFID tag 75 in a range of a width E in the right-left direction as an example. An information recording method is not limited to the RFID, and another method, such as a barcode, may be used.

Fig. 3 is a B-B cross-sectional side view of the separation column connection device 100 and illustrates the state where the separation column 2 is pressurized and connected. As described above, the first heat block 3 has the protruding portion projecting downward, and the protruding portion is exposed downward from a through hole of the column holder 4. The second heat block 12 is disposed in the base 7 and comes into contact with the lower surface of the first heat block 3 from below to be opposed to the first heat block 3. The heater guide 48 is fixed to the base 7 and has an approximately rectangular-shaped through hole through which the second heat block 12 passes in the up-down direction. The second heat block 12 is movably supported along the through hole of the heater guide 48 in the up-down direction.

The second heat block 12 has a lower surface on which the pair of heater push springs 49 (for example, compression springs) are disposed. The heater push springs 49 (second biasing member) bias the second heat block 12 upward. The stoppers 50 function as stoppers for the heater push springs 49. Since the heater push springs 49 are arranged in pairs symmetrically at the front and rear relative to the second heat block 12, an upward pressing force can be applied uniformly to the second heat block 12.

The upper surface of the second heat block 12 has a height set to be higher than a position of the lower surface of the first heat block 3 when the column cartridge 1 is set. When the column cartridge 1 is set into the column case 8 from above, the upper surface of the second heat block 12 comes into contact with the lower surface of the first heat block 3.

In a state where the column cartridge 1 is set in the column case 8 while the first pipe 13 and the second pipe 14 are pressurized and connected to the separation column 2, the second heat block 12 comes into contact with the first heat block 3 to be pushed down. This compresses the heater push springs 49, generates an upward reactive force to the second heat block 12, and biases the second heat block 12 to the first heat block 3 with an appropriate biasing force.

On the second heat block 12, a pair of heater push-down protrusions 52 are disposed to project outward from one another on further outer sides in the front-rear direction with respect to the pair of heater push springs 49. The heater push-down protrusion 52 has an approximately L-shaped cross-sectional surface when viewed in the right-left direction. When a downward force larger than an upward pushing force by the heater push springs 49 is applied to the heater push-down protrusions 52, the second heat block 12 moves down along the through hole of the heater guide 48, generating a void between the upper surface of the second heat block 12 and the lower surface of the first heat block 3 in the column cartridge 1.

### <Operation of Heater Moving Mechanism>

The heater moving mechanism moves the second heat block 12 down in conjunction with turning movement of the crank arms 32 by driving of the driving device 37. The following describes the details of the heater moving mechanism using Fig. 1 and Fig. 3.

The interlocking link 53 is turnably journaled around the interlocking link supporting point 54. The interlocking link 53 has a width in the front-rear direction approximately equal to an interval between the pair of heater push-down protrusions 52 and has a symmetrical shape in the front-rear direction relative to the first pipe 13 and the second pipe 14 in plan view.

A left end of the interlocking link 53 extends upward and is arranged so as to come into contact with lower surface sides of the crank arms 32. A right end of the interlocking link 53 on the opposite side across the interlocking link supporting point 54 forms the heater push-down portions 55. The heater push-down portions 55 are arranged to act on upper surfaces of the pair of heater push-down protrusions 52. On the underside of the left end portion of the interlocking link 53, the stoppers 50 extending a part of the base 7 are disposed and limit a range of the turning movement of the interlocking link 53 in a counterclockwise direction in Fig. 1.

The heater release spring 56 (for example, compression springs) is disposed between the interlocking link supporting point 54 and the heater push-down portions 55. The heater release spring 56 (second biasing member) is arranged between the lower surface of the heater guide 48 and an upper surface of the interlocking link 53 and generates a moment of clockwise rotation in the drawing to the interlocking link 53 to generate a force to move down the heater push-down portions 55 at the right end of the interlocking link 53.

The magnitude of a spring force of the heater release spring 56 is described. In a state where the interlocking link 53 is freely turnable by releasing an abutting portion 77 at the left end portion of the interlocking link 53, when the heater push-down portions 55 come into contact with the heater push-down protrusions 52, a force to move the second heat block 12 down by the spring force of the heater release spring 56 is set to be larger than a force to move the second heat block 12 up by the heater push springs 49. That is, the downward spring force by the heater release spring 56 overcomes the force of the heater push springs 49, and the second heat block 12 moves down.

On the other hand, when the left end of the interlocking link 53 is pushed down, needless to say, the heater push-down portions 55 at the right end of the interlocking link 53 move up and are separated from the upper surfaces of the heater push-down protrusions 52. Accordingly, the second heat block 12 moves up by the spring force of the heater push springs 49 and comes into contact with the first heat block 3 to transmit the heat from the heater element 51 through the second heat block 12 to the first heat block 3, allowing heating the separation column 2 at a predetermined temperature.

### <Removal of Column Cartridge 1>

### (1) Pressurized State

Fig. 1 to Fig. 3 illustrate a state where the crank arms 32 turn in a clockwise direction by an angle θ1 with respect to what is called the top dead center position in which the output gear spindles 35, the crank spindles 33, and the connecting rod spindles 29 are aligned to come into contact with the interlocking link abutting portion 77, causing the turning movement to stop. In this state, the first pipe distal end surface 21 is in a state of being in contact with the first abutting surface 57 (left end) of the separation column 2 through the hole 9L provided in the left sidewall surface 8L of the column case 8 to have moved the separation column 2 to the right side (for example, around 1 mm) together with the column case 8 and the column cartridge 1. In addition, the second pipe 14 is pushed by the second abutting surface 58 (right end) of the separation column 2 to move to the right side. This transmits a rightward force to the second pipe fixing portion 11 and the pressing block 17 to compress the pressing spring 16, generating a predetermined biasing force. Thus, the pressurized state (closed state) where the separation column 2 is pressurized and sandwiched between the first pipe distal end surface 21 and the second pipe distal end surface 20 by the predetermined biasing force is reached. By supplying a sample using one of the first pipe 13 and the second pipe 14 as an inlet pipe and the other as an outlet pipe in this state, the sample can be separated and extracted. In this state, since the separation column 2 is sandwiched between the first pipe 13 and the second pipe 14, an operator cannot remove the column cartridge 1 from the column case 8.

Further, the crank arms 32 rotates by θ1 with respect to the top dead center position and come into contact with the interlocking link abutting portion 77 that acts as a stopper, thereby causing a leftward biasing force from the pressing spring 16 to travel through the connecting rods 30 to provide a rotation moment of clockwise rotation in the drawing (second direction) to the crank arms 32. Since the rotation moment acts in a direction that brings the crank arms 32 into contact with the interlocking link abutting portion 77 further strongly, the crank arms 32 and the connecting rods 30 are locked, and the biasing force by the pressing spring 16 is not loosened. Therefore, the highly reliable separation column connection device 100 can be provided.

### (2) Start of Release

The operator operates a control device (not illustrated) to input a command for starting the removal operation of the column cartridge 1. When having received the start command for the removal operation, the control device sends a driving signal to the motor 38 and rotates the output shaft of the motor 38 counterclockwise in plan view. When the output shaft of the motor 38 is rotated counterclockwise, the output gears 36 also rotate in a counterclockwise direction in the drawing, and the crank arms 32 also turn in the counterclockwise direction in the drawing.

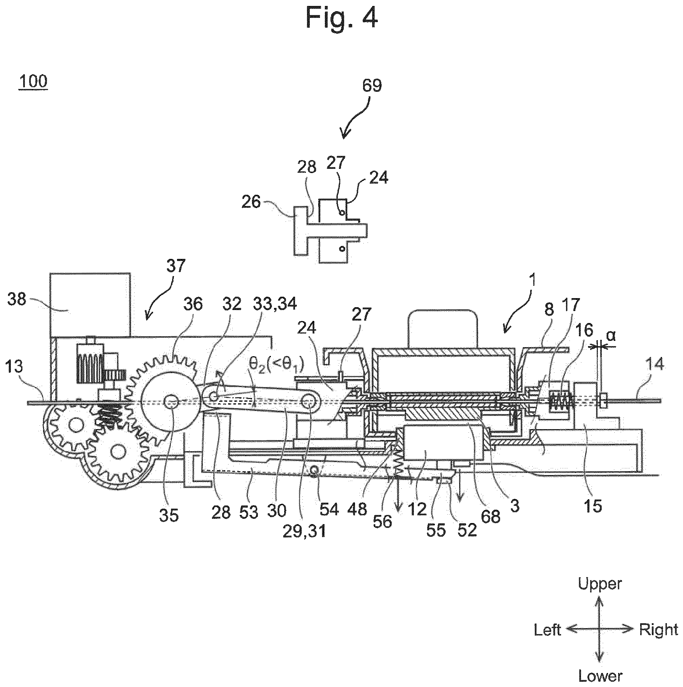

Fig. 4 illustrates a state where the output gears 36 are rotated in the counterclockwise direction, and the crank arms 32 are rotated to an angle θ2 across the horizontal inversely to Fig. 1. Here, in a case where θ2 = θ1, the position of the connecting rod spindles 29 is not changed from that in Fig. 1, and therefore, the pressing force to the separation column 2 by the first pipe 13 and the second pipe 14 is maintained. Further, the position in the right-left direction of the column cartridge 1 is not moved.

Since the crank arms 32 are separated from the interlocking link abutting portion 77, the interlocking link 53 turns clockwise in the drawing by the biasing force of the heater release spring 56, and the heater push-down portions 55 comes into contact with the heater push-down protrusions 52 to move the second heat block 12 down and generate a void 68 between it and the first heat block 3.

Since the position in the right-left direction of the column cartridge 1 is not moved from the pressurized state illustrated in Fig. 1, sliding motion does not occur with respect to the first heat block 3 when the second heat block 12 moves down. Therefore, reliability can be ensured without generating abrasion powder.

### (3) During Separation

When the motor 38 is further rotated to turn the output gears 36 and the crank arms 32 in the counterclockwise direction, the first pipe distal end surface 21 moves to the left. The pressing spring 16, which has been compressed to generate the biasing force, extends by the displacement α, the large-diameter portion of the pressing stopper 18 comes into contact with the fixing block 15, and the biasing force to the separation column 2 is released.

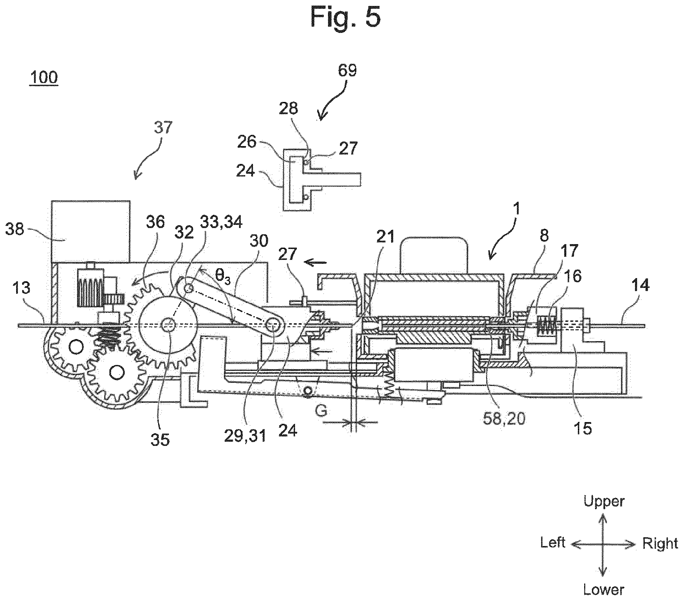

Fig. 5 illustrates a state where the crank arms 32 turn in the counterclockwise direction by θ3, the movement block 24 moves to the left by the distance L, and the stopper pins 27 come into contact with the abutting portion 28 of the slide plate 26. Dimensions of respective members are determined to have a positional relationship such that the position of the first pipe distal end surface 21 moves to the left with respect to a left side surface of the column case 8 to generate a gap G (> 0) between the left side surface of the column case 8 and the first pipe distal end surface 21. In Fig. 5, the column case 8 is in a state of having moved to the left by a compression amount α of the pressing spring 16 together with the column cartridge 1.

As described with reference to Fig. 4, the second heat block 12 is in a descended position, generating a gap between it and the first heat block 3. Therefore, even when the column cartridge 1 moves to the left, the second heat block 12 does not slide with respect to the first heat block 3, allowing avoidance of abrasion.

### (4) Open State

When the motor 38 is further rotated to turn the output gears 36 and the crank arms 32 in the counterclockwise direction, the movement block 24 further moves to the left, and the open state in which the movement block 24 has moved farthest to the left is reached. The control device de-energizes the motor 38 when the open state is reached.

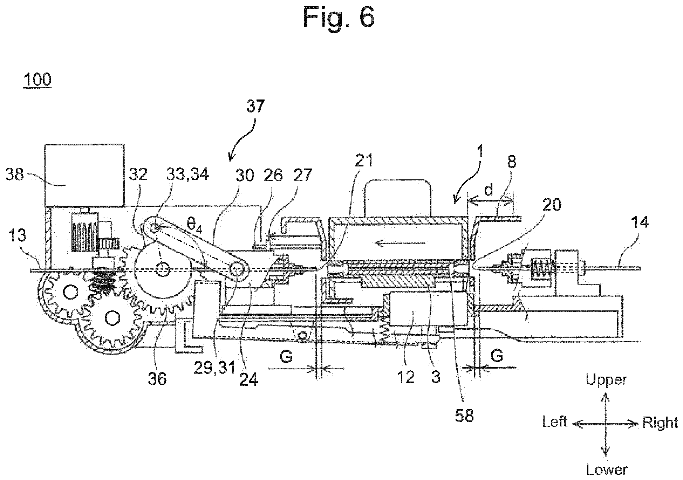

Fig. 6 illustrates an open state where crank arms turn in the counterclockwise direction by θ4 (< θ3). Here, a moving amount of the column cartridge 1 and the column case 8 from the state where the separation column 2 is pressurized and connected (Fig. 1) to the open state illustrated in Fig. 6 is defined as d.

From the state of Fig. 5, the stopper pins 27 are in a state of being in contact with the abutting portion 28 of the slide plate 26. Accordingly, when the movement block 24 further moves to the left, the force to the left travels through the stopper pins 27 and the slide plate 26, and the column case 8 with the column cartridge 1 incorporated moves to the left together with the movement block 24. With such a configuration, the gap G between the left side surface of the column case 8 and the first pipe distal end surface 21 is maintained as it is.

While the crank arms 32 turn from a turning angle of θ3 to θ4, the column case 8 moves to the left. Accordingly, the second abutting surface 58 (right end surface) of the separation column 2 and the second pipe distal end surface 20 are separated from one another. Here, the turning angle θ4 is assumed to be an open position, which is a position that generates the gap G between the second pipe distal end surface 20 and a right side surface of the column case 8. This illustrates a state where the movement block 24 has further moved to the left by a distance d from the state of Fig. 5.

That is, in the open state of Fig. 6, the movement block 24 moves to the left by a distance (d + L). Here, since d = L may hold, the moving amount of the movement block 24 is (2 × L) in that case, and the column case 8 moves to the left by the distance L that is 1/2 thereof. The positional relation is such that the respective equal gaps G are generated between the first pipe distal end surface 21 and the left side surface of the column case 8 and between the second pipe distal end surface 20 and the right side surface of the column case 8.

In addition, the second heat block 12 is in a descended position by the spring force of the heater release spring 56 and the action of the heater push-down portions 55 and the heater push-down protrusions 52 and is separated from the first heat block 3. Accordingly, when the column cartridge 1 moves, the heat blocks do not slide with respect to one another, allowing avoidance of generation of abrasion powder.

While the positional relation in the open position is such that the gap G generated between the first pipe distal end surface 21 and the left side surface of the column case 8 is equal to the gap G generated between the second pipe distal end surface 20 and the right side surface of the column case 8, the moving amount of the movement block 24 and the moving amount of the column case 8 are not necessarily in a ratio of 2:1. That is, d ≠ L holds, the gaps at the left side and the right side of the column case 8 relative to the respective corresponding pipe distal ends need not be equal, and one gap may be larger than the other gap.

Moreover, in the open state of Fig. 6, even if the operator applied a force to move the column cartridge 1 to the right, that is, to a direction for setting the column cartridge 1, the worm gear 42 is used as a part of a reduction gear, and the worm gear 42 could not be rotated from the worm wheel 44 side. Accordingly, by de-energizes the motor 38 in the open state, a state where the open state is maintained and locked is reached. That is, the operator manually setting the column cartridge 1 by mistake does not happen, and the highly reliable separation column connection device 100 can be provided.

### (5) Detachment

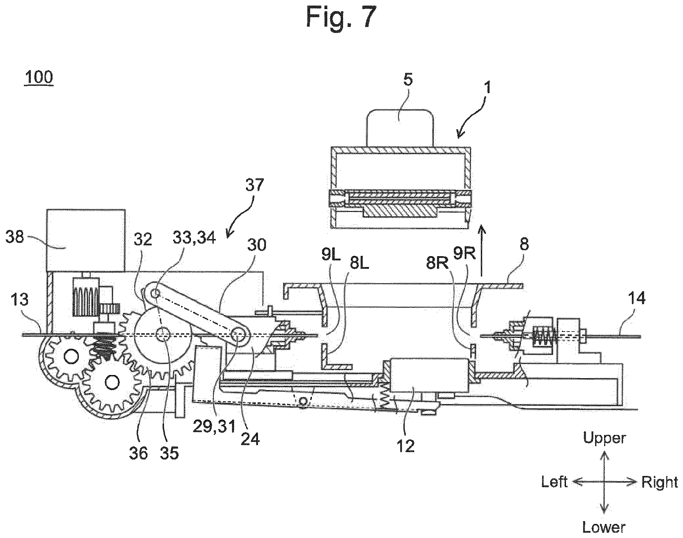

Fig. 7 illustrates a state where the column cartridge 1 is pulled out upward and detached in the open state illustrated in Fig. 6. As illustrated in Fig. 7, since both the first pipe distal end surface 21 and the second pipe distal end surface 20 are positioned on the outer sides with respect to the left and right side surfaces of the column case 8, they do not become obstacles when the column cartridge 1 is pulled out upward. Further, the first pipe distal end surface 21 and the second pipe distal end surface 20 do not become obstacles when a new column cartridge 1 is set into the column case 8 from above.

As described above, by dimensioning the diameter of the hole 9L open to the left sidewall surface 8L and the diameter of the hole 9R open to the right sidewall surface 8R so as not to allow the operator's fingertips to enter, the operator's hand cannot contact the first pipe distal end surface 21 or the second pipe distal end surface 20 even in a state where the column cartridge 1 is removed. This avoids adhesion of foreign matter and the like, allows providing a highly reliable separation column connection device.

### <Attachment of Column Cartridge 1>

When a new column cartridge 1 is attached after the column cartridge 1 is detached, the operator inserts the column cartridge 1 into the column case 8 from above so as to reach the state of Fig. 6 from the state of Fig. 7. After attaching the column cartridge 1 to the column case 8, the operator operates the control device to input a command for starting the attaching operation of the column cartridge 1. When receiving the start command of the attaching operation, the control device sends a driving signal to the motor 38, rotates the output shaft of the motor 38 clockwise in plan view, and turns the crank arms 32 clockwise in the drawing.

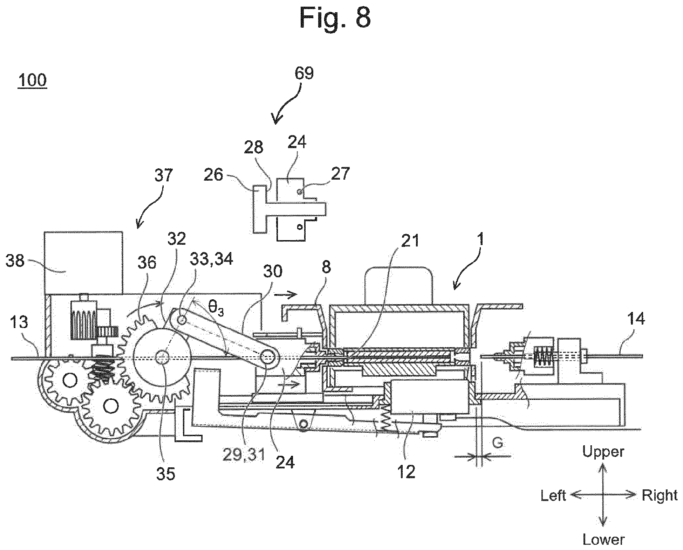

Fig. 8 is a drawing illustrating a state where the crank arms 32 turn in the clockwise direction from θ4 to θ3. When the crank arms 32 turn in the clockwise direction from θ4 to θ3, the movement block 24 moves to the right together with the stopper pins 27, and the stopper pins 27 are separated from the abutting portion 28, therefore not generating a force to move the column case 8 to the right. Accordingly, the column case 8 and the column cartridge 1 do not move. On the other hand, the first pipe 13 moves to the right together with the movement block 24, and the first pipe distal end surface 21 comes into contact with the left end surface of the separation column 2.

When the crank arms 32 are further turned clockwise in the drawing to the angle θ2 from this state, a rightward force is transmitted via the first pipe 13 to push the column case 8 and the column cartridge 1 to the right. This brings the right end surface of the separation column 2 into contact with the second pipe distal end surface 20 as illustrated in Fig. 4 to compress the pressing spring by the displacement α, and the separation column 2 is sandwiched by the first pipe 13 and the second pipe 14 with a predetermined preload.

Until this state is reached, the second heat block 12 remains in a descended state, and the void exists between it and the first heat block 3 disposed in the column cartridge 1.

Furthermore, rotating the crank arms 32 clockwise in the drawing to the angle θ1 returns the state of Fig. 1. At this time, the crank arms 32 push down the interlocking link abutting portion 77 while the separation column 2 remains sandwiched by the first pipe 13 and the second pipe 14 with a predetermined biasing force. This causes the interlocking link 53 to turn around the interlocking link supporting point 54 in the counterclockwise direction. The interlocking link 53 moves the heater push-down portions 55 up while compressing the heater release spring 56. Additionally, the heater push-down portions 55 are separated from the upper surfaces of the heater push-down protrusions 52, and the second heat block 12 moves up by the pushing force of the heater push springs 49 and are pressed to the first heat block 3 to return the state where the separation column 2 can be heated. As described above, the new column cartridge 1 can be attached.

### <Reading Range of RFID Tag>

The relationship between the moving amount of the column cartridge 1 and the column case 8 and a reading range E of the RFID reader 74 (Fig. 2) is described. The moving amount of the column cartridge 1 and the column case 8 from the state where the separation column 2 is pressurized and connected illustrated in Fig. 1 to Fig. 3 to the open state illustrated in Fig. 6 and Fig. 7 is d, and E > d holds for the relationship relative to the reading range E of the RFID reader 74. Furthermore, the position of the RFID reader 74 and the position of the RFID tag 75 are determined such that the position of the RFID tag 75 disposed in the column cartridge 1 constantly falls within the reading range E of the RFID reader 74 while the column cartridge 1 moves by d. This allows the RFID reader 74 to read the information of the RFID tag 75 as long as the column cartridge 1 is set in the column case 8. Accordingly, the state of the column cartridge 1 can be always confirmed, as necessary. As a result, the highly reliable separation column connection device 100 can be provided.

### <Summary of First Embodiment>

As described above, the separation column connection device 100 according to the embodiment employs the configuration in which the column cartridge 1 containing the separation column 2 inside is connected to or disconnected from the column case 8 as a unit. In view of this, it is only necessary for the operator to move the column cartridge 1 in the up-down direction and connect or disconnect the column cartridge 1 from the upper surface opening of the column case 8 in replacing the separation column 2, therefore facilitating the replacement of the separation column 2.

When the separation column 2 is connected or disconnected, first, among the first pipe 13 and the second pipe 14 that bias the separation column 2 from both sides in an opposed manner, the first pipe 13 is moved to a direction separated from the separation column 2 to release the biasing force. Next, the column case 8 is moved by approximately 1/2 of the separation column 2 in the same direction as the first pipe 13 by the interlocking mechanism to move both the first pipe 13 and the second pipe 14 to the outer sides with respect to the column case 8. In the state, the first pipe 13 and the second pipe 14 do not become obstacles in connecting or disconnecting the column cartridge 1 from the opening of the column case 8, therefore facilitating the replacement of the separation column 2.

The separation column connection device 100 according to the embodiment includes the driving device 37 using the motor 38 as the driving source. By driving the motor 38, the first pipe 13 and the column case 8 can be moved in a separating direction (right-left inner side) and a preload direction (right-left outer sides) in a reversible manner. Thus, the operator need not manually perform preload operation, reducing the burden on the operator and facilitating the use.

### [Second Embodiment]

When the column cartridge 1 is replaced, the operator spills a reagent solution by mistake, or a specimen solution leaks from a joint portion of the pipes and the separation column 2 in some cases. If the reagent or specimen solution thus leaked reaches the heater element 51 that heats the second heat block 12 from the bottom surface of the column case 8, a short circuit may occur. Therefore, in a second embodiment, a configuration in which liquid that enters the column case 8 does not reach the heater element 51 is proposed.

### <Exemplary Configuration of Separation Column Connection Device>

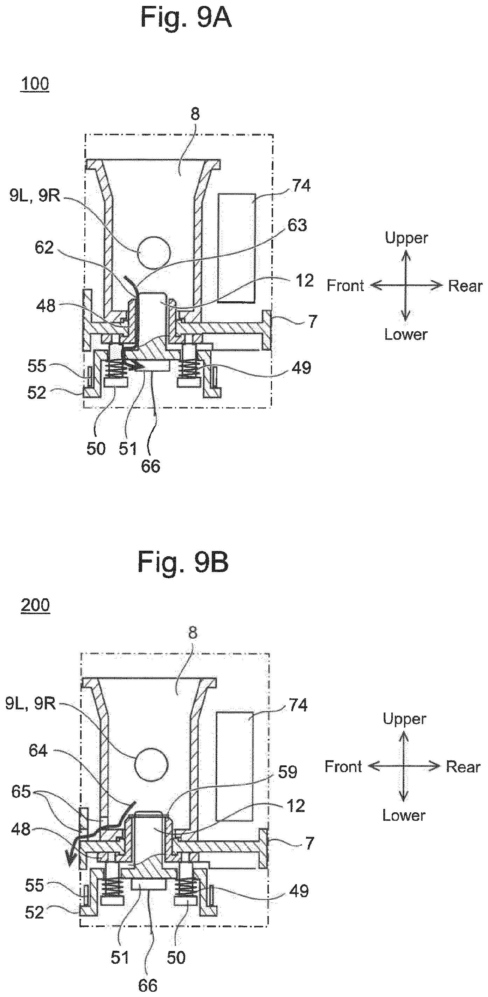

Fig. 9A is a B-B cross-sectional side view of the separation column connection device 100 according to the first embodiment and illustrates a state where the column cartridge 1 is detached. As illustrated in Fig. 9A, in the configuration of the first embodiment, the second heat block 12 is exposed from near the bottom surface of the column case 8, and may be directly covered with liquid when the liquid enters from the upper surface.

The second heat block 12 is movably supported along the opening of the heater guide 48 in the up-down direction and biased upward by the heater push springs 49. A gap 62 is provided between a side surface of the second heat block 12 and the opening of the heater guide 48 so as to allow sliding. Accordingly, when liquid enters a gap between the second heat block 12 and the opening of the heater guide 48, the liquid flows along a liquid path 63. The liquid that has reached a lower end of the heater guide 48 passes through a gap between the stoppers 50 of the heater push springs 49 and the heater guide 48 to reach the heater element 51.

Fig. 9B is a B-B cross-sectional side view of a separation column connection device 200 according to the second embodiment and illustrates a state where the column cartridge 1 is detached. As illustrated in Fig. 9B, a flange 59 is disposed between the upper surface (heat-transmitting surface) of the second heat block 12 and a heater guide upper surface 60 (first surface) such that liquid does not enter a gap between the second heat block 12 and the opening of the heater guide 48. The flange 59 moves in the up-down direction as a unit with the second heat block 12. The flange 59 is a sheet-shaped member having a size that can cover the opening of the upper surface of the heater guide 48 and projects in the front-rear direction and the right-left direction. The flange 59 may be integrated with the second heat block 12 or may be configured by fitting a metal plate or rubber plate with the second heat block 12.

As illustrated in Fig. 9B, liquid that has entered the column case 8 from above is guided along a liquid path 64 from the upper surface of the second heat block 12 through the flange 59 to the outer side of the heater guide 48. Accordingly, the liquid is guided to the bottom surface of the column case 8 without entering a gap 61 between the second heat block 12 and the heater guide 48. Furthermore, by opening liquid discharge ports 65 on a side surface near the bottom surface of the column case 8 and a side surface of the base 7, the liquid is discharged to the outer side of the base 7 through the liquid discharge ports 65.

Furthermore, by arranging the separation column connection device 100 to be inclined lower toward the front such that a side of the liquid discharge ports 65 (the front side in Fig. 9B) becomes lower without arranging it horizontally, the highly reliable separation column connection device 100 that ensures discharging liquid can be provided.

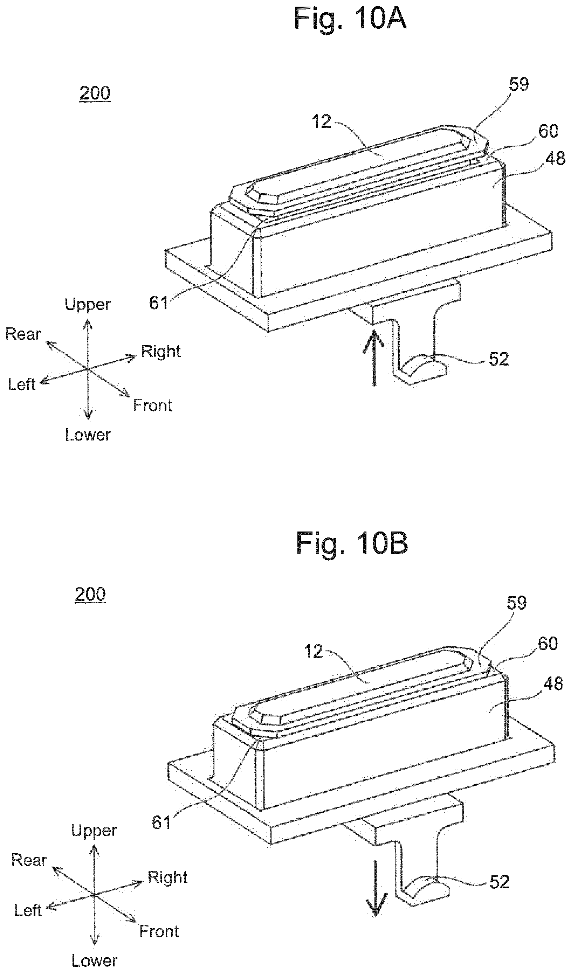

Fig. 10A is a drawing illustrating a state where the separation column 2 is set and preloaded as illustrated in Fig. 1. As illustrated in Fig. 10A, in the state, the second heat block 12 is biased upward by the biasing force of the heater push springs 49, causing the upper surface to be in contact with the first heat block 3. At this time, the gap 61 is generated between the flange 59 and the heater guide upper surface 60.

Fig. 10B is a drawing illustrating a state where the heater push-down portions 55 act downward on the heater push-down protrusions 52. **In** the state, the second heat block 12 moves down, a lower surface of the flange 59 comes into contact with the heater guide upper surface 60, and the flange 59 closes the opening of the heater guide upper surface 60. The configuration described above ensures discharging the liquid that has entered the column case 8.

### <Summary of Second Embodiment>

As described above, the separation column connection device 200 of the embodiment includes the sheet-shaped flange 59 around the second heat block 12. When the second heat block 12 moves down, the flange 59 closes a gap between the second heat block 12 and the heater guide 48 by the action of the interlocking link 53. Accordingly, when liquid is spilled by mistake, the liquid does not enter from the gap to reach the heater element 51. Furthermore, the liquid discharge ports 65 are provided in the column case 8 and the base 7, thereby discharging the liquid without it accumulating inside the column case 8. As a result, since a short circuit of the heater element 51 is avoided, the highly secure separation column connection device 200 can be provided.

### [Third Embodiment]

In the second embodiment, the configuration of discharging liquid that has entered the column case 8 has been described. In a third embodiment, a configuration in which liquid leakage from the pressing block 17 or the movement block 24 is discharged at the right-left outer sides of the column case 8 is proposed.

### <Exemplary Configuration of Separation Column Connection Device>

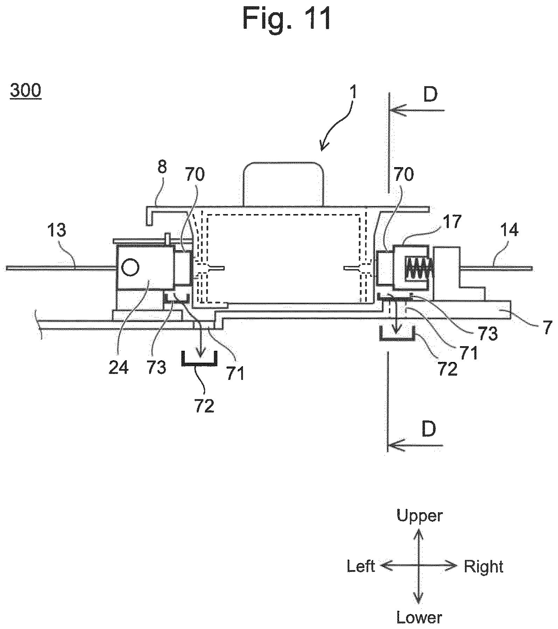

Fig. 11 is a schematic front view of a separation column connection device 300 according to the third embodiment. As illustrated in Fig. 11, the separation column connection device 300 is different from the second embodiment in that it further includes fastening portions 70, liquid discharge ports 71, collecting gutters 72, and gutters 73. The respective fastening portions 70 are disposed on the pressing block 17 and the movement block 24 and strongly fasten the first pipe 13 and the second pipe 14 via wedges (such as in a conical shape), which is not illustrated, to avoid leakage of a high-pressure specimen solution passing through the pipes. The respective gutters 73 are disposed on the lower sides of the fastening portions 70. When a slight amount of liquid leaks from the fastening portions 70, the liquid is received by the gutters 73. The liquid discharge ports 71 are provided, so as to pass through the base 7, at positions through which the liquid that has flowed from the gutters 73 can pass. The respective collecting gutters 72 are disposed on the lower sides of the liquid discharge ports 71. A waste liquid container (not illustrated) is arranged on the lower side of the collecting gutters 72. The liquid that has flowed from the collecting gutters 72 is stored in the waste liquid container for disposal.

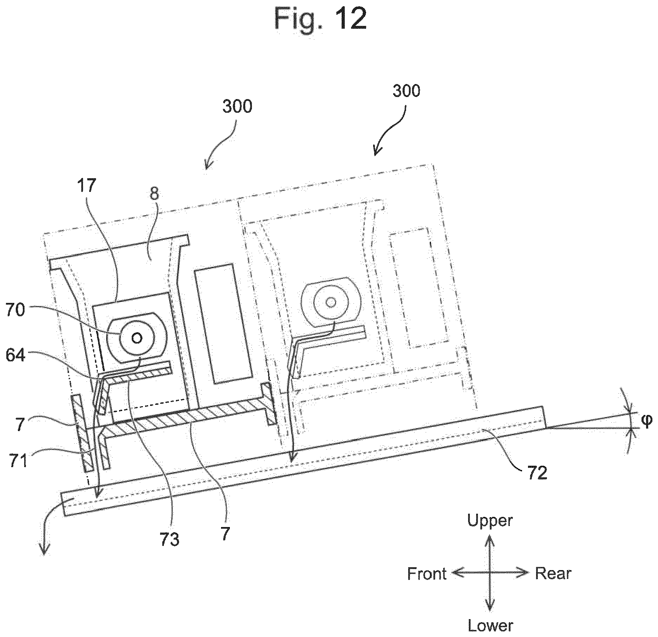

Fig. 12 is a schematic D-D cross-sectional side view of the separation column connection device 300. In Fig. 12, a plurality of separation column connection devices 300 are placed side by side adjacently to one another and further arranged to be inclined by an angle φ so as to become lower at the front than at the rear. The collecting gutters 72 extend in the front-rear direction and arranged over the lower sides of the plurality of separation column connection devices 300. As illustrated by the liquid path 64 in Fig. 12, when liquid leaks from the fastening portion 70, it is received by the gutter 73, flows forward by the inclination to drop on the base 7, passes through the liquid discharge port 71 provided on the front side of the base 7 to drop on the collecting gutter 72, and flows forward by the inclination to drop from a front end of the collecting gutter 72. The liquid discharge ports 65 and the liquid discharge ports 71 are disposed closely to the front of the base 7, thereby ensuring discharging the leaked liquid.

Here, as an example, the inclination angle φ can be, for example, 5° or more such that the liquid surely flows forward, and can be an inclination angle of approximately 10° in some cases.

### <Summary of Third Embodiment>

As described above, the separation column connection device 300 of the embodiment is arranged in an inclined manner to become lower at the front and higher at the rear, and leaked liquid flows forward and passes through the gutters 73, the liquid discharge ports 71, and the collecting gutters 72 in this order. This ensures discharging the leaked liquid.

### [Modification]

### Reference Signs List

- 100 to 300: Separation column connection device
- 1: Column cartridge
- 2: Separation column
- 3: First heat block
- 4: Column holder
- 5: Tab
- 7: Base
- 8: Column case
- 10: First pipe fixing portion
- 11: Second pipe fixing portion
- 12: Second heat block
- 13: First pipe
- 14: Second pipe
- 15: Fixing block
- 16: Pressing spring
- 17: Pressing block
- 18: Pressing stopper
- 19: Second pipe fixing screw
- 20: Second pipe distal end surface
- 21: First pipe distal end surface
- 22: Slide rail
- 23: Slider
- 24: Movement block
- 25: First pipe fixing screw
- 26: Slide plate
- 27: Stopper pin
- 28: Abutting portion
- 37: Driving device
- 59: Flange
- 69: Interlocking mechanism
- 70: Fastening portion
- 71: Liquid discharge port
- 72: Collecting gutter
- 73: Gutter
- 76: Heating mechanism

## Claims

1. A separation column connection device comprising:
a driving device (37) that supports a first pipe (13) along a first direction and moves the first pipe in the first direction;
a fixing member (15) that fixes a second pipe (14) so as to be opposed to the first pipe along the first direction;
a column case (8) arranged between the first pipe and the second pipe, the column case having a first hole (9L) with which the first pipe communicates and a second hole (9R) with which the second pipe communicates; and
an interlocking mechanism (69) adapted to move the column case in the first direction in conjunction with movement of the first pipe,
wherein the column case allows a column cartridge (1) retaining a separation column (2) to be connected and disconnected, and
wherein the driving device is adapted to move the first pipe and the interlocking mechanism such that two states are reversibly taken, the two states including a closed state in which the separation column is pressurized and sandwiched between the first pipe and the second pipe and an open state in which the first pipe and the second pipe are positioned at an outer side of the column case;
**characterized in that** the driving device includes:
a motor (38) as a driving source;
an output gear (36) rotatably journaled around a first spindle (35);
a speed reducer (42) adapted to transmit a rotational force of the motor to the output gear at a reduced speed;
a crank arm (32) that has one end portion fixed to the output gear to rotate as a unit with the output gear;
a moving member (24) adapted to retain the first pipe and linearly move in the first direction together with the first pipe;
a first biasing member (16) adapted to retain the second pipe and to be compressed by a predetermined amount in the closed state to bias the separation column with a predetermined pressing force;
a second spindle (29) disposed in the moving member;
a connecting rod (30) having one end portion rotatably journaled around the second spindle; and
a common third spindle (33) adapted to rotatably journal another end portion of the crank arm and another end portion of the connecting rod,
wherein the driving device is configured to convert rotation operation of the crank arm into a linear operation of the moving member,
wherein the third spindle is arranged outside a straight line connecting the first spindle and the second spindle in the open state, and
wherein the third spindle is adapted to rotate the crank arm in a direction in which the first pipe approaches the separation column to exceed a top dead center position in which the first spindle, the third spindle, and the second spindle are arranged in a straight line in this order, so as to bring the first pipe and the second pipe into contact with the separation column, compress the first biasing member by the predetermined amount, and reach the closed state.

2. The separation column connection device according to claim 1,
wherein the interlocking mechanism (69) is adapted to move the column case (8) such that a moving amount of the column case is less than a moving amount of the first pipe (13).

3. The separation column connection device according to claim 1,
wherein the open state is a state where an interval between the first pipe (13) and the second pipe (14) is larger than a width in the first direction of the column case (8).

4. The separation column connection device according to claim 1,
wherein a diameter of the first hole (9L) and a diameter of the second hole (9R) have sizes that block contact of an operator from an inside of the column case (8) via the first hole and the second hole to the first pipe (13) and the second pipe (14) in the open state.

5. The separation column connection device according to claim 4,
wherein the diameter of the first hole (9L) and the diameter of the second hole (9R) are 10 mm or less.

6. The separation column connection device according to claim 1,
wherein the first spindle (35), the output gear (36), and the crank arm (32) are disposed in pairs in an opposed manner across the first pipe (13),
wherein a void larger than a diameter of the first pipe is provided between the pair of the first spindles, and
wherein a central axis of the first spindle intersects with a central axis of the first pipe.

7. The separation column connection device according to claim 1,
wherein the separation column (2) is held by the column cartridge (1) in a state where at least a part of the separation column is covered with a first heat block (3),
wherein the separation column connection device includes:
a second heat block (12) having a heat-transmitting surface opposed to a heat-receiving surface of the first heat block;
a heater element (51) that contacts the second heat block to become a heat source; and
a moving mechanism adapted to operate in conjunction with the driving device and to movably support the second heat block such that the heat-receiving surface is brought into contact with or separated from the heat-transmitting surface,
wherein the moving mechanism:
includes a second biasing member (49) adapted to bias the heat-transmitting surface of the second heat block toward the heat-receiving surface of the first heat block;
is adapted to separate the heat-transmitting surface of the second heat block from the heat-receiving surface of the first heat block against a biasing force by the second biasing member while the closed state shifts to the open state by operation of the driving device (37); and
is adapted to bring the heat-transmitting surface of the second heat block into contact with the heat-receiving surface of the first heat block by the biasing force by the second biasing member while the open state shifts to the closed state by operation of the driving device.

8. The separation column connection device according to claim 7,
wherein the moving mechanism:
has a through hole and includes a heat block guide (48) adapted to movably support the second heat block (12) through the through hole in an up-down direction; and
is adapted to cause the heat-transmitting surface to project with respect to a first surface of the heat block guide parallel to the heat-transmitting surface of the second heat block when bringing the heat-transmitting surface of the second heat block into contact with the heat-receiving surface of the first heat block (3), and
wherein the second heat block has a flange on an upper side with respect to the first surface of the heat block guide, and the flange is larger than the through hole.

9. The separation column connection device according to claim 8,
wherein the column case (8) further includes a drain port.

10. The separation column connection device according to claim 9,
wherein the column case (8) is inclined with respect to a horizontal plane such that the drain port is positioned below thereof.

11. The separation column connection device according to claim 1,
wherein the column cartridge (1) includes an information recording unit (75) that allows recording of information of the column cartridge,
wherein the separation column connection device further includes an information reader (74) disposed at a position opposed to the information recording unit, the information reader allowing recording and writing of information of the information recording unit, and
wherein the information reader has a readable range larger than a moving range of the information recording unit between the open state and the closed state.

12. A separation device comprising the separation column connection device according to claim 1.

## Patentansprüche

1. Trennsäulen-Verbindungseinrichtung, umfassend:
eine Antriebseinrichtung (37), die eine erste Leitung (13) entlang einer ersten Richtung stützt und die erste Leitung in der ersten Richtung bewegt;
ein Befestigungselement (15), das eine zweite Leitung (14) so befestigt, dass sie der ersten Leitung entlang der ersten Richtung gegenüberliegt;
ein Säulengehäuse (8), das zwischen der ersten Leitung und der zweiten Leitung angeordnet ist, wobei das Säulengehäuse ein erstes Loch (9L), mit dem die erste Leitung kommuniziert, und ein zweites Loch (9R), mit der die zweite Leitung kommuniziert, aufweist; und
einen Verriegelungsmechanismus (69), der dazu ausgelegt ist, das Säulengehäuse in der ersten Richtung zusammen mit der Bewegung der ersten Leitung zu bewegen,
wobei das Säulengehäuse ermöglicht, dass eine Säulenpatrone (1), die eine Trennsäule (2) hält, verbunden und getrennt werden kann, und
wobei die Antriebseinrichtung dazu ausgelegt ist, die erste Leitung und den Verriegelungsmechanismus so zu bewegen, dass zwei Zustände umkehrbar eingenommen werden, wobei die zwei Zustände einen geschlossenen Zustand, in dem die Trennsäule unter Druck gesetzt und zwischen der ersten Leitung und der zweiten Leitung sandwichartig angeordnet ist, und einen offenen Zustand, in dem die erste Leitung und die zweite Leitung an einer Außenseite des Säulengehäuses positioniert sind, einschließen;
**gekennzeichnet dadurch, dass** die Antriebseinrichtung enthält:
einen Motor (38) als Antriebsquelle;
ein Ausgangsrad (36), das drehbar um eine erste Spindel (35) gelagert ist;
einen Drehzahlminderer (42), der dazu ausgelegt ist, eine Rotationskraft des Motors bei reduzierter Drehzahl an das Ausgangsrad zu übertragen;
einen Kurbelarm (32), der einen Endabschnitt aufweist, der an dem Ausgangsrad befestigt ist, um als Einheit mit dem Ausgangsrad zu rotieren;
ein Bewegungselement (24), das dazu ausgelegt ist, die erste Leitung zu halten und sich in der ersten Richtung zusammen mit der ersten Leitung linear zu bewegen;
ein erstes Vorspannelement (16), das dazu ausgelegt ist, die zweite Leitung zu halten und in einem vorbestimmten Ausmaß im geschlossenen Zustand komprimiert zu werden, um die Trennsäule mit einer vorbestimmten Andruckkraft vorzuspannen;
eine zweite Spindel (29), die im Bewegungselement angeordnet ist;
eine Verbindungsstange (30), die einen Endabschnitt aufweist, der drehbar um die zweite Spindel gelagert ist; und
eine gemeinsame dritte Spindel (33), die dazu ausgelegt ist, einen anderen Endabschnitt des Kurbelarms und einen anderen Endabschnitt der Verbindungsstange drehbar zu lagern,
wobei die Antriebseinrichtung dazu eingerichtet ist, den Rotationsbetrieb des Kurbelarms in einen linearen Betrieb des Bewegungselements umzuwandeln,
wobei die dritte Spindel außerhalb einer geraden Linie angeordnet ist, die die erste Spindel und die zweite Spindel im offenen Zustand verbindet, und
wobei die dritte Spindel dazu ausgelegt ist, den Kurbelarm in eine Richtung zu drehen, in der sich die erste Leitung der Trennsäule nähert, um eine obere Totlage zu überschreiten, in der die erste Spindel, die dritte Spindel und die zweite Spindel in dieser Reihenfolge in einer geraden Linie angeordnet sind, um die erste Leitung und die zweite Leitung in Kontakt mit der Trennsäule zu bringen, das erste Vorspannelement im vorbestimmten Ausmaß zu komprimieren und den geschlossenen Zustand zu erreichen.

2. Trennsäulen-Verbindungseinrichtung nach Anspruch 1,
wobei der Verriegelungsmechanismus (69) dazu ausgelegt ist, das Säulengehäuse (8) so zu bewegen, dass ein Bewegungsbetrag des Säulengehäuses geringer ist als ein Bewegungsbetrag der ersten Leitung (13).

3. Trennsäulen-Verbindungseinrichtung nach Anspruch 1,
wobei der offene Zustand ein Zustand ist, in dem ein Abstand zwischen der ersten Leitung (13) und der zweiten Leitung (14) größer ist als eine Breite in der ersten Richtung des Säulengehäuses (8).

4. Trennsäulen-Verbindungseinrichtung nach Anspruch 1,
wobei ein Durchmesser des ersten Lochs (9L) und ein Durchmesser des zweiten Lochs (9R) Größen aufweisen, die einen Kontakt eines Bedieners von einem Inneren des Säulengehäuses (8) über das erste Loch und das zweite Loch zu der ersten Leitung (13) und der zweiten Leitung (14) im offenen Zustand blockieren.

5. Trennsäulen-Verbindungseinrichtung nach Anspruch 4,
wobei der Durchmesser des ersten Lochs (9L) und der Durchmesser des zweiten Lochs (9R) 10 mm oder weniger betragen.

6. Trennsäulen-Verbindungseinrichtung nach Anspruch 1,
wobei die erste Spindel (35), das Ausgangsrad (36) und der Kurbelarm (32) paarweise in einer über die erste Leitung (13) gegenüberliegenden Weise angeordnet sind,
wobei ein Hohlraum, der größer ist als ein Durchmesser der ersten Leitung, zwischen dem Paar der ersten Spindeln vorgesehen ist, und
wobei eine Mittelachse der ersten Spindel eine Mittelachse der ersten Leitung schneidet.

7. Trennsäulen-Verbindungseinrichtung nach Anspruch 1,
wobei die Trennsäule (2) von der Säulenpatrone (1) in einem Zustand gehalten wird, in dem mindestens ein Teil der Trennsäule mit einem ersten Heizblock (3) bedeckt ist,
wobei die Trennsäulen-Verbindungseinrichtung enthält:
einen zweiten Heizblock (12), der eine Wärmeübertragungsoberfläche aufweist, die einer Wärmeempfangsoberfläche des ersten Heizblocks gegenüberliegt;
ein Heizelement (51), das den zweiten Heizblock kontaktiert, um eine Wärmequelle zu werden; und
einen Bewegungsmechanismus, der dazu ausgelegt ist, mit der Antriebseinrichtung zusammenzuarbeiten und den zweiten Heizblock beweglich zu stützen, so dass die Wärmeempfangsoberfläche in Kontakt mit der Wärmeübertragungsoberfläche gebracht oder von dieser getrennt wird,
wobei der Bewegungsmechanismus:
ein zweites Vorspannelement (49) enthält, das dazu ausgelegt ist, die Wärmeübertragungsoberfläche des zweiten Heizblocks in Richtung der Wärmeempfangsoberfläche des ersten Heizblocks vorzuspannen;
dazu ausgelegt ist, die Wärmeübertragungsoberfläche des zweiten Heizblocks von der Wärmeempfangsoberfläche des ersten Heizblocks gegen eine Vorspannkraft durch das zweite Vorspannelement zu trennen, während der geschlossene Zustand durch Betrieb der Antriebseinrichtung (37) in den offenen Zustand übergeht; und
dazu ausgelegt ist, die Wärmeübertragungsoberfläche des zweiten Heizblocks durch die Vorspannkraft durch das zweite Vorspannelement in Kontakt mit der Wärmeempfangsoberfläche des ersten Heizblocks zu bringen, während der offene Zustand durch Betrieb der Antriebseinrichtung in den geschlossenen Zustand übergeht.

8. Trennsäulen-Verbindungseinrichtung nach Anspruch 7,
wobei der Bewegungsmechanismus:
ein Durchgangsloch aufweist und eine Heizblockführung (48) enthält, die dazu ausgelegt ist, den zweiten Heiz-block (12) durch das Durchgangsloch in einer Auf-Ab-Richtung beweglich zu stützen; und
dazu ausgelegt ist, die Wärmeübertragungsoberfläche bezüglich einer ersten Oberfläche der Heizblockführung parallel zur Wärmeübertragungsoberfläche des zweiten Heizblocks vorstehen zu lassen, wenn die Wärmeübertragungsoberfläche des zweiten Heizblocks in Kontakt mit der Wärmeempfangsoberfläche des ersten Heizblocks (3) gebracht wird, und
wobei der zweite Heizblock einen Flansch an einer oberen Seite bezüglich der ersten Oberfläche der Heizblockführung aufweist und der Flansch größer ist als das Durchgangsloch.

9. Trennsäulen-Verbindungseinrichtung nach Anspruch 8,
wobei das Säulengehäuse (8) ferner eine Ablauföffnung enthält.

10. Trennsäulen-Verbindungseinrichtung nach Anspruch 9,
wobei das Säulengehäuse (8) bezüglich einer horizontalen Ebene geneigt ist, sodass die Ablauföffnung unterhalb davon positioniert ist.

11. Trennsäulen-Verbindungseinrichtung nach Anspruch 1,
wobei die Säulenpatrone (1) eine Informationsaufzeichnungseinheit (75) enthält, die eine Aufzeichnung von Informationen der Säulenpatrone ermöglicht,
wobei die Trennsäulen-Verbindungseinrichtung ferner einen Informationsleser (74) enthält, der an einer Position gegenüber der Informationsaufzeichnungseinheit angeordnet ist, wobei der Informationsleser eine Aufzeichnung und ein Schreiben von Informationen der Informationsaufzeichnungseinheit ermöglicht, und
wobei der Informationsleser einen lesbaren Bereich aufweist, der größer ist als ein Bewegungsbereich der Informationsaufzeichnungseinheit zwischen dem offenen Zustand und dem geschlossenen Zustand.

12. Trennvorrichtung, umfassend die Trennsäulen-Verbindungseinrichtung nach Anspruch 1.

## Revendications

1. Dispositif de connexion de colonne de séparation comprenant :
un dispositif (37) d'entraînement qui supporte un premier tuyau (13) le long d'un premier sens et déplace le premier tuyau dans le premier sens ;
un élément (15) de fixation qui fixe un deuxième tuyau (14) de façon à ce qu'il soit opposé au premier tuyau le long du premier sens ;
un boîtier (8) de colonne agencé entre le premier tuyau et le deuxième tuyau, le boîtier de colonne ayant un premier trou (9L) avec lequel le premier tuyau communique et un deuxième trou (9R) avec lequel le deuxième tuyau communique ; et
un mécanisme (69) d'interverrouillage adapté à déplacer le boîtier de colonne dans le premier sens en conjonction avec un mouvement du premier tuyau,
dans lequel le boîtier de colonne permet qu'une cartouche (1) de colonne retenant une colonne (2) de séparation soit connectée et déconnectée, et
dans lequel le dispositif d'entraînement est adapté à déplacer le premier tuyau et le mécanisme d'interverrouillage de telle sorte que deux états sont pris de façon inversable, les deux états incluant un état fermé dans lequel la colonne de séparation est sous pression et prise en sandwich entre le premier tuyau et le deuxième tuyau et un état ouvert dans lequel le premier tuyau et le deuxième tuyau sont positionnés sur un côté extérieur du boîtier de colonne ;
**caractérisé en ce que** le dispositif d'entraînement inclut :
un moteur (38) comme une source d'entraînement ;
un engrenage (36) de sortie monté rotatif autour d'un premier axe (35) ;
un réducteur (42) de vitesse adapté à transmettre une force de rotation du moteur à l'engrenage de sortie à une vitesse réduite ;
un bras (32) de manivelle qui a une partie d'extrémité fixée à l'engrenage de sortie pour tourner comme une unité avec l'engrenage de sortie ;
un élément mobile (24) adapté à retenir le premier tuyau et à se déplacer linéairement dans le premier sens ensemble avec le premier tuyau ;
un premier élément (16) de poussée adapté à retenir le deuxième tuyau et à être compressé d'une quantité prédéterminée dans l'état fermé pour pousser la colonne de séparation avec une force de pression prédéterminée ;
un deuxième axe (29) disposé dans l'élément mobile ;
une tige (30) de connexion ayant une partie d'extrémité montée rotative autour du deuxième axe ; et
un troisième axe commun (33) adapté à monter rotatives une autre partie d'extrémité du bras de manivelle et une autre partie d'extrémité de la tige de connexion,
dans lequel le dispositif d'entraînement est configuré pour convertir une opération de rotation du bras de manivelle en une opération linéaire de l'élément mobile,
dans lequel le troisième axe est agencé à l'extérieur d'une ligne droite connectant le premier axe et le deuxième axe dans l'état ouvert, et
dans lequel le troisième axe est adapté à faire tourner le bras de manivelle dans un sens dans lequel le premier tuyau s'approche de la colonne de séparation pour dépasser une position de point mort haut dans laquelle le premier axe, le troisième axe, et le deuxième axe sont agencés sur une ligne droite dans cet ordre, de façon à amener le premier tuyau et le deuxième tuyau en contact avec la colonne de séparation, à compresser le premier élément de poussée d'une quantité prédéterminée, et à atteindre l'état fermé.

2. Dispositif de connexion de colonne de séparation selon la revendication 1,
dans lequel le mécanisme (69) d'interverrouillage est adapté à déplacer le boîtier (8) de colonne de telle sorte qu'une quantité de déplacement du boîtier de colonne est inférieure à une quantité de déplacement du premier tuyau (13).

3. Dispositif de connexion de colonne de séparation selon la revendication 1,
dans lequel l'état ouvert est un état où un intervalle entre le premier tuyau (13) et le deuxième tuyau (14) est plus grand qu'une largeur dans le premier sens du boîtier (8) de colonne.

4. Dispositif de connexion de colonne de séparation selon la revendication 1,
dans lequel un diamètre du premier trou (9L) et un diamètre du deuxième trou (9R) ont des tailles qui bloquent un contact d'un opérateur depuis un intérieur du boîtier (8) de colonne par l'intermédiaire du premier trou et du deuxième trou jusqu'au premier tuyau (13) et au deuxième tuyau (14) dans l'état ouvert.

5. Dispositif de connexion de colonne de séparation selon la revendication 4,
dans lequel le diamètre du premier trou (9L) et le diamètre du deuxième trou (9R) sont 10 mm ou moins.

6. Dispositif de connexion de colonne de séparation selon la revendication 1,
dans lequel le premier axe (35), l'engrenage (36) de sortie, et le bras (32) de manivelle sont disposés par paires de manière opposée de part et d'autre du premier tuyau (13),
dans lequel un vide plus grand qu'un diamètre du premier tuyau est prévu entre la paire des premiers axes, et
dans lequel un axe central du premier axe se croise avec un axe central du premier tuyau.

7. Dispositif de connexion de colonne de séparation selon la revendication 1,
dans lequel la colonne (2) de séparation est maintenue par la cartouche (1) de colonne dans un état où au moins une partie de la colonne de séparation est recouverte avec un premier bloc (3) de chauffe,
dans lequel le dispositif de connexion de colonne de séparation inclut :
un deuxième bloc (12) de chauffe ayant une surface de transmission de chaleur opposée à une surface de réception de chaleur du premier bloc de chauffe ;
un élément chauffant (51) qui vient au contact du deuxième bloc de chauffe pour devenir une source de chaleur ; et
un mécanisme mobile adapté à opérer en conjonction avec le dispositif d'entraînement et à supporter de façon mobile le deuxième bloc de chauffe de telle sorte que la surface de réception de chaleur est amenée en contact avec ou séparée de la surface de transmission de chaleur,
dans lequel le mécanisme mobile :
inclut un deuxième élément (49) de poussée adapté à pousser la surface de transmission de chaleur du deuxième bloc de chauffe vers la surface de réception de chaleur du premier bloc de chauffe ;
est adapté à séparer la surface de transmission de chaleur du deuxième bloc de chauffe de la surface de réception de chaleur du premier bloc de chauffe contre une force de poussée par le deuxième élément de poussée tandis que l'état fermé passe à l'état ouvert par l'opération du dispositif (37) d'entraînement ; et
est adapté à amener la surface de transmission de chaleur du deuxième bloc de chauffe en contact avec la surface de réception de chaleur du premier bloc de chauffe par la force de poussée par le deuxième élément de poussée tandis que l'état ouvert passe à l'état fermé par l'opération du dispositif d'entraînement.

8. Dispositif de connexion de colonne de séparation selon la revendication 7,
dans lequel le mécanisme mobile :
a un trou traversant et inclut un guide (48) de bloc de chauffe adapté à supporter de façon mobile le deuxième bloc (12) de chauffe par le trou traversant dans un sens haut-bas ; et
est adapté à amener la surface de transmission de chaleur à se projeter par rapport à une première surface du guide de bloc de chauffe parallèlement à la surface de transmission de chaleur du deuxième bloc de chauffe lors de la mise de la surface de transmission de chaleur du deuxième bloc de chauffe en contact avec la surface de réception de chaleur du premier bloc (3) de chauffe, et
dans lequel le deuxième bloc de chauffe a un collet sur un côté supérieur par rapport à la première surface du guide de bloc de chauffe, et le collet est plus grand que le trou traversant.

9. Dispositif de connexion de colonne de séparation selon la revendication 8,
dans lequel le boîtier (8) de colonne inclut en outre un orifice d'évacuation.

10. Dispositif de connexion de colonne de séparation selon la revendication 9,
dans lequel le boîtier (8) de colonne est incliné par rapport à un plan horizontal de telle sorte que l'orifice d'évacuation est positionné en-dessous de celui-ci.

11. Dispositif de connexion de colonne de séparation selon la revendication 1,
dans lequel la cartouche (1) de colonne inclut une unité (75) d'enregistrement d'informations qui permet l'enregistrement d'informations de la cartouche de colonne,
dans lequel le dispositif de connexion de colonne de séparation inclut en outre un lecteur (74) d'informations disposé à une position opposée à l'unité d'enregistrement d'informations, le lecteur d'informations permettant l'enregistrement et l'écriture d'informations de l'unité d'enregistrement d'informations, et
dans lequel le lecteur d'informations a une plage lisible plus grande qu'une plage de mouvement de l'unité d'enregistrement d'informations entre l'état ouvert et l'état fermé.

12. Dispositif de séparation comprenant le dispositif de connexion de colonne de séparation selon la revendication 1.
